# FASCICULE DE BREVET EUROPEEN

(11) **EP 1 482 588 B1**
(45) Date de publication et mention de la délivrance du brevet: **01.03.2006**
(21) Numéro de dépôt: 04300285.6
(22) Date de dépôt: 18.05.2004
(51) Int. Cl.: H01M 8/04, H01M 8/10

(54) **Module de puissance pour véhicule automobile comprenant une pile à combustible et procédé de mise hors gel d'une pile à combustible**
Brennstoffzellen-Antriebseinheit für ein Kraftfahrzeug und Verfahren zum Auftauen einer Brennstoffzelle
Fuel cell power unit for a vehicle and process for de-icing of a fuel cell

(30) Priorité: 28.05.2003 FR 0306538
(43) Date de publication de la demande: 01.12.2004
(73) Titulaire: Renault s.a.s., 92100 Boulogne Billancourt (FR)
(72) Inventeur: Rouveyre, Luc, 94100 Saint Maur des Fossés (FR)

(56) Documents cités:
- US-A1- 2003 054 211
- US-B1- 6 358 637
- PATENT ABSTRACTS OF JAPAN vol. 0111, no. 98 (E-519), 25 juin 1987 (1987-06-25) & JP 62 024570 A (HITACHI LTD), 2 février 1987 (1987-02-02)

## Description

La présente invention a pour objet un module de puissance pour véhicule automobile comprenant une pile à combustible du type à membrane échangeuse de protons à électrolyte solide, ainsi qu'un procédé permettant la mise hors gel de la pile à combustible.

Les piles à combustible nécessitent une alimentation en air comprimé pour générer un courant électrique avec un rendement acceptable, ainsi qu'une alimentation en carburant constituée d'un gaz riche en hydrogène. L'alimentation en hydrogène peut être assurée par stockage d'hydrogène dans un réservoir embarqué dans le cas d'unc application à un véhicule de transport ou par la production in situ d'un gaz riche en hydrogène au moyen d'un reformeur utilisant un carburant hydrocarboné contenu dans un réservoir embarqué.

Un tel module de puissance pour véhicule automobile comprend également un groupe moto compresseur lié à une turbine de récupération pour l'alimentation de la pile à combustible en air comprimé.

Les piles à combustible du type à membrane échangeuse de protons à électrolyte solide (PEMFC) permettent la génération d'électricité par une réaction électrochimique entre un élément anodique et un élément cathodique séparés par un électrolyte solide sous la forme d'une membrane réalisée par exemple en matériau polymère perfluoré sulfuré.

La réaction à l'anode est :

H₂ → 2H⁺ + 2e⁻

A la cathode, la réaction est :

½O₂ + 2H⁺ → H₂O

Une telle pile à combustible est généralement constituée d'un empilement de cellules élémentaires, chaque cellule constituant un générateur électrochimique. Les cellules sont branchées en série et leur alimentation en réactif, c'est-à-dire en hydrogène à l'anode et en oxygène à la cathode, se fait en parallèle.

Des plaques dites « plaques bipolaires » emprisonnent chaque cellule individuelle afin de lui assurer une stabilité mécanique suffisante et de permettre la distribution des gaz dans les chambres anodique et cathodique respectives. La réaction électrochimique étant exothermique, il est nécessaire d'évacuer la chaleur produite par un circuit de refroidissement qui est prévu dans certaines de ces plaques bipolaires. De celles plaques dites « plaques de refroidissement » permettent ainsi, grâce à la circulation d'un fluide caloporteur, de maintenir la pile à combustible à une température convenable en évitant la surchauffe de ses éléments internes.

Les membranes électrolyte utilisées dans chacune des cellules de la pile à combustible sont choisies de façon à assurer une bonne isolation électrique tout en favorisant la conduction ionique. Les membranes choisies doivent également présenter une perméabilité suffisante aux gaz réactifs tout en restant stables thermiquement et mécaniquement.

De plus, pour maintenir un fonctionnement convenable de ces membranes, il est nécessaire d'éviter une dessiccation exagérée en humidifiant à la fois le carburant gazcux et l'air comprimé alimentant la pile à combustible.

Dans ces conditions, une pile à combustible contient une quantité non négligeable d'eau sous forme liquide lors de son fonctionnement. Cette cau subsiste après l'arrêt de la pile à combustible et peut créer des difficultés lorsque le véhicule reste arrêté pendant une durée suffisamment longue dans des conditions de température ambiante inféricures à 0°C. Pour éviter la détérioration de la pile à combustible et en outre faciliter le démarrage à froid, il est donc nécessaire de prévoir un drainage de la pile à combustible après arrêt de son fonctionnement, de façon à éliminer de la pile à combustible, l'eau stagnant aussi bien dans les canaux des plaques de refroidissement que dans les membranes électrolytiques et les plaques bipolaires poreuses.

Le brevet US 6 358 637 prévoit, à cet effet, d'ajouter à un groupe moto compresseur une pompe à vide montée entre les circuits cathodique et anodique de la pile à combustible et pouvant être mise en marche après arrêt du fonctionnement de la pile à combustible, de façon à créer une dépression capable de produire une évaporation de l'eau contenue dans la pile à combustible.

Une telle solution présente l'inconvénient de nécessiter l'adjonction d'une pompe à vide, ce qui entraîne des coûts supplémentaires, Même dans le cas où le véhicule comprend déjà une pompe à vide pour d'autres utilisations, il est nécessaire de prévoir des conduites supplémentaires pour relier la pompe à vide à la pile à combustible pendant les phases de drainage.

La présente invention a pour objet de permettre la mise hors gel d'une pile à combustible par des moyens plus simples et de moindre coût.

Le module de puissance, selon l'invention, pour véhicule automobile, comprend une pile à combustible du type à membrane échangeuse de protons à électrolyte solide, un groupe moto compresseur lié à une turbine de récupération pour l'alimentation de la pile à combustible en air comprimé et un moyen d'alimentation de la pile à combustible en gaz riche en hydrogène. Il comprend également des moyens pour inverser le sens de rotation du groupe moto compresseur et des moyens, par exemple des vannes, pour la mise en liaison des circuits cathodique et anodique de la pile à combustible.

Il est ainsi possible de procéder de façon simple à la mise hors gel de la pile à combustible en drainant l'eau qu'elle contient en créant, une dépression dans la pile à combustible au moyen du groupe moto compressent normalement utilisé pour l'alimentation de la pile à combustible en air comprimé. Le groupe moto compresseur remplit ainsi une double fonction, assurant non seulement l'alimentation en air comprimé pendant le fonctionnement normal mais également le drainage après l'arrêt.

De préférence, le groupe moto compresseur et la turbine sont du type volumétrique.

Les vannes utilisées pour mettre en liaison les circuits cathodique et anodique de la pile à combustible pendant la phase de drainage peuvent être intégrées à l'assemblage de la pile à combustible ou montées respectivement en amont et en aval de la pile à combustible.

Le procédé de l'invention permet la mise hors gel d'une pile à combustible du type à membrane échangeuse de protons à électrolyte solide alimentée en air comprimé par un groupe moto compresseur lié à une turbine de récupération. Conformément à l'invention, après arrêt du fonctionnement de la pile à combustible, on met en communication les circuits cathodique et anodique de la pile à combustible et on entraîne, pendant une phase de drainage de durée prédéterminée, le groupe moto compresseur en sens inverse du sens de rotation utilisé pendant le fonctionnement de la pile à combustible.

De préférence, la vitesse de rotation du groupe moto compresseur est choisie de façon que la pression différentielle absolue entre l'entrée et la sortie de la pile à combustible pendant la phase de drainage soit de 0.5 à 0.8 bars.

L'invention sera mieux comprise à l'étude d'un mode de réalisation détaillé décrit à titre d'exemple nullement limitatif et illustré par les dessins annexés, sur lesquels :
- la figure 1 montre schématiquement les principaux éléments d'un module de puissance comprenant une pile à combustible dans sa configuration de fonctionnement normal ; et
- la figure 2 illustre les mêmes éléments pendant le fonctionnement en phase de drainage,

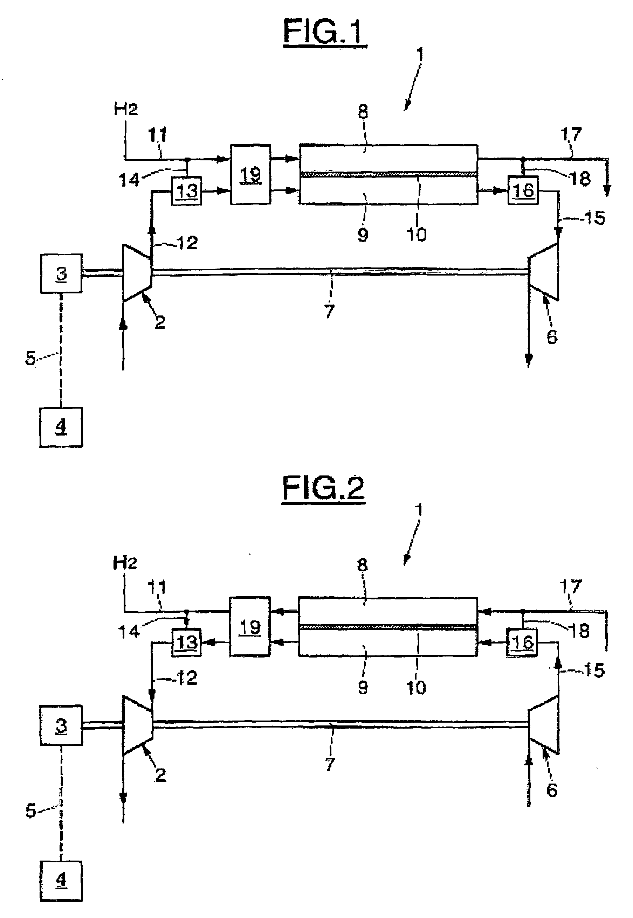

Tel qu'il est illustré sur la figure 1, le module de puissance comprend une pile à combustible 1 qui peut être alimentée en air comprimé par un compresseur volumétrique 2 entraîné en rotation par un moteur électrique 3 dont le sens de rotation peut être commandé par un dispositif de commande 4 relié au moteur 3 par la connexion 5. Une turbine 6 du type volumétrique est montée sur un arbre 7 commun au compresseur 2 et au moteur 3.

La pile à combustible 1 est avantageusement du type à membrane échangeuse de protons (PEMFC) à électrolyte solide. On sait qu'une telle pile à combustible est constituée d'un empilement de cellules élémentaires branchées électriquement en série et dont l'alimentation en réactifs se fait en parallèle. On a représenté sehématiquement sur la figure 1 la zone anodique 8 et la zone cathodique 9 séparées schématiquement par la membrane électrolytique 10 constituée par un polymère électrolytique poreux. En réalité, la pile à combustible 1 est constituée par un empilement de cellules élémentaires reliées électriquement en série, non illustrées sur la figure.

En fonctionnement normal, tel qu'illustré sur la figure 1, la zone anodique 8 est alimentée en gaz riche en hydrogène, à travers un humidificateur 19, par la conduite 11. La zone cathodique 9 est alimentée en air comprimé provenant du compresseur 2 à travers l'humidificateur 19 par la conduite 12, l'air comprimé traversant une électrovanne 13 qui, dans l'exemple illustré sur la figure 1, est disposée en amont à l'extérieur de la pile à combustible 1. Une conduite de liaison 14 est en outre prévue entre la vanne 13 et la conduite 11 d'alimentation en hydrogène. En fonctionnement normal, la vanne 13 empêche tout passage dans la conduite de liaison 14, les zones anodique 8 et cathodique 9 étant isolées.

Les gaz n'ayant pas réagi s'échappent de la zone cathodique 9 par la conduite de sortie 15 après avoir traversé une électrovanne 16 placée eu aval à l'extérieur de la pile à combustible 1. Les gaz véhiculés par la conduite de sortie 15 peuvent se détendre dans la turbine 6 qui récupère une partie de leur énergie pour l'entraînement du compresseur 2 par l'axe commun 7.

Les gaz n'ayant pas réagi, issus de la zone anodique 8, sont extraits par la conduite de sortie 17. Une conduite de liaison 18 relie la vanne 16 à la conduite de sortie 17 en aval de la pile à combustible 1.

Lors du fonctionnement normal de la pile à combustible, tel qu'illustré sur la figure 1, la vanne 16 bloqué tout passage vers la conduite de liaison 18.

Lorsque la pile à combustible 1 est arrêtée, il est nécessaire, comme indiqué précédemment, de procéder à un drainage de l'eau se trouvant contenue dans la pile à combustible 1, qu'il s'agisse de l'eau formée par la réaction électrolytique, de l'eau ou du liquide restant dans les canaux de refroidissement, non représentés sur la figure, ou de l'eau provenant de l'humidification des gaz réactifs d'alimentation par l'humidificateur 19.

A cet effet, on procède selon l'invention à la mise hors gel de la pile à combustible 1, en créant dans la pile à combustible un flux d'air en dépression permettant le drainage de l'eau à la fois par effet d'entraînement et par évaporation.

Pour ce faire, comme illustré sur la figure 2, on inverse le sens de rotation du compresseur 2 et de la turbine 6 par inversion du sens de rotation du moteur 3. Les vannes 13 et 16 sont placées en position d'ouverture des deux conduites de liaison 14 et 18, de façon à mettre eu liaison les zones anodique 8 et cathodique 9 de la pile à combustible 1. Bien entendu, pendant cette phase de drainage, l'alimentation en hydrogène est supprimée.

Grâce à l'inversion du sens de circulation dans le circuit comportant le compresseur volumétrique 2 et la turbine volumétrique 6, le circuit anodique 8 comme le circuit anodique 9 se trouvent traversés par un flux d'air créant une dépression qui peut être de l'ordre de 0,5 à 0,8 bars absolus. L'can se trouvant à l'intérieur de la pile à combustible est entraînée par effet mécanique. De plus, la dépression ainsi créée favorise les phénomènes d'évaporation dans les zones humides où le gradient de vitesse serait trop faible pour provoquer la mise en mouvement de l'eau.

L'invention peut être appliquée à tous types de plaques bipolaires, qu'elles soient poreuses on solides. Dans le cas de plaques bipolaires poreuses, la dépression créée permet une aspiration de l'eau se trouvant dans la zone cathodique ainsi que dans la zone anodique grâce aux deux vannes 13 et 16. Une pression différentielle de l'ordre de 0,14 bars est suffisante pour entraîner un drainage convenable. Une telle pression différentielle est obtenue par la dépression de 0,5 à 0,8 bars absolus provoquée par l'inversion du sens de rotation du groupe moto compresseur.

Dans le cas de plaques bipolaires solides, l'eau qui doit être extraite de la pile à combustible est en beaucoup plus faible volume et la dépression ainsi créée est suffisante pour entraîner une évaporation de l'eau contenue dans les plaques bipolaires.

Bien que l'on ait illustré sur les figures l'existence de deux vannes 13 et 16 à commande électrique, disposées respectivement en amont et en aval à l'extérieur de la pile à combustible 1, on comprendre que des vannes équivalentes puissent être montées à l'intérieur même de l'assemblage de la pile à combustible 1.

La présente invention permet ainsi la mise hors gel d'une pile à combustible par un flux d'air en dépression, sans qu'il soit nécessaire de prévoir un quelconque composant spécifique à cette fonction dans le module de puissance comprenant la pile à combustible. Le groupe moto compresseur déjà utilisé pour l'alimentation en air comprimé pendant le fonctionnement normal de la pile à combustible, joue un rôle complémentaire pas une simple inversion de son sens de rotation pendant une phase de drainage de durée prédéterminée.

Le fait que le groupe moto compresseur possède ainsi deux fonctionnalités, réduit le nombre de composants du module de puissance et améliore la sûreté du système ainsi que sa disponibilité.

## Revendications

1. Module de puissance pour véhicule automobile, comprenant une pile à combustible (1) du type à membrane échangeuse de protons à électrolyte solide, un groupe moto compresseur (2) lié à une turbine de récupération (6) pour l'alimentation de la pile à combustible en air comprimé et un moyen d'alimentation de la pile à combustible en gaz riche en hydrogène, **caractérisé par le fait qu'**il comprend des moyens pour inverser te sens de rotation du groupe moto compresseur (2) et deux vannes (13, 16) de mise en liaison des circuits cathodique et anodique de la pile à combustible.

2. Module de puissance selon la revendication 1, **caractérisé par le fait que** le groupe moto compresseur et la turbine sont du type volumétrique.

3. Module de puissance selon les revendications 1 ou 2, **caractérisé par le fait que** les vannes sont intégrées à l'assemblage de la pile à combustible.

4. Module de puissance selon les revendications 1 ou 2, **caractérisé par le fait que** les vannes (13, 16) sont montées respectivement en amont et en aval à l'extérieur de la pile à combustible.

5. Procédé de mise hors gel d'une pile à combustible du type à membrane échangeuse de protons à électrolyte solide alimentée en air comprimé par un groupe moto compresseur (2) lié à une turbine de récupération (6), **caractérisé par le fait qu'**après arrêt du fonctionnement de la pile à combustible (1), on met en communication les circuits cathodique (9) et anodique (8) de la pile à combustible et on entraîne, pendant une phase de drainage de dorée prédéterminée, le groupe moto compresseur en sens inverse du sens de rotation utilisé pendant le fonctionnement de la pile à combustible.

6. Procédé selon la revendication 5, **caractérisé par le fait que** la vitesse de rotation du groupe moto compresseur est choisie de façon que la pression différentielle absolue entre l'entrée et la sortie de la pile à combustible pendant la phase de drainage soit de 0.5 à 0.8 bars.

## Claims

1. A power module for a motor vehicle comprising a fuel cell (1) of the solid electrolyte proton exchange membrane type, a motor-compressor unit (2) connected to a recovery turbine (6) for supplying the fuel cell with compressed air and a means for supplying the fuel cell with hydrogen-rich gas, **characterised in that** it comprises means for reversing the direction of rotation of the motor-compressor unit (2) and two valves (13, 16) for communicating the cathodic and anodic circuits of the fuel cell.

2. A power module according to claim 1 **characterised in that** the motor-compressor unit and the turbine are of volumetric type.

3. A power module according to claim 1 or claim 2 **characterised in that** the valves are integrated in the assembly of the fuel cell.

4. A power module according to claim 1 or claim 2 **characterised in that** the valves (13, 16) are respectively mounted upstream and downstream on the outside of the fuel cell.

5. A process for preventing icing of a fuel cell of solid electrolyte proton exchange membrane type supplied with compressed air by a motor-compressor unit (2) connected to a recovery turbine (6) **characterised in that** after stoppage of the operation of the fuel cell (1) the cathodic (9) and anodic (8) circuits of the fuel cell are communicated and during a drainage phase of predetermined duration the motor-compressor unit is driven in the reverse direction to the direction of rotation used during operation of the fuel cell.

6. A process according to claim 5 **characterised in that** the speed of rotation of the motor-compressor unit is so selected that the absolute differential pressure between the intake and the outlet of the fuel cell during the drainage phase is 0.5 to 0.8 bar.

## Patentansprüche

1. Leistungsmodul für ein Kraftfahrzeug mit einer Brennstoffzelle (1) vom Typ mit einer Protonenaustauschmembran und einem Festkörperelektrolyt, einer Motorkompressorgruppe (2) zur Versorgung der Brennstoffzelle mit verdichteter Luft, die mit einer Rückgewinnungsturbine (6) verbunden ist, und einem Mittel zur Versorgung der Brennstoffzelle mit wasserstoffreichem Gas, **gekennzeichnet durch** die Tatsache, dass es Mittel umfasst, um die Drehrichtung der Motorkompressorgruppe (2) umzukehren, und zwei Ventile (13, 16) zum In-Verbindungbringen der kathodischen und anodischen Kreisläufe der Brennstoffzelle.

2. Leistungsmodul gemäß Anspruch 1, **gekennzeichnet durch** die Tatsache, dass die Motorkompressorgruppe und die Turbine vom volumetrischen Typ sind.

3. Leistungsmodul gemäß den Ansprüchen 1 oder 2, **gekennzeichnet durch** die Tatsache, dass die Ventile in den Aufbau der Brennstoffzelle integriert sind.

4. Leistungsmodul gemäß den Ansprüchen 1 oder 2, **gekennzeichnet durch** die Tatsache, dass die Ventile (13, 16) jeweils vorgeschaltet und nachgeschaltet außerhalb der Brennstoffzelle montiert sind.

5. Verfahren zum gegen Frost sichern einer Brennstoffzelle vom Typ mit einer Protonenaustauschmembran und einem Festkörperelektrolyt, die durch eine Motorkompressorgruppe (2) mit verdichteter Luft versorgt wird, die mit einer Rückgewinnungsturbine (6) verbunden ist, **gekennzeichnet durch** die Tatsache, dass nach Beenden des Betriebs der Brennstoffzelle (1) die kathodischen (9) und anodischen (8) Kreisläufe der Brennstoffzelle in Verbindung gesetzt werden und während einer Entwässerungsphase von vorbestimmter Dauer die Motorkompressorgruppe in der zur während des Betriebs der Brennstoffzelle verwendeten Drehrichtung entgegengesetzten Richtung angetrieben wird.

6. Verfahren gemäß Anspruch 5, **gekennzeichnet durch** die Tatsache, dass die Drehgeschwindigkeit der Motorkompressorgruppe derart gewählt wird, dass der absolute Differentialdruck zwischen dem Eingang und dem Ausgang der Brennstoffzelle während der Entwässerungsphase 0,5 bis 0,8 Bar beträgt.
